(19) Europäisches Patentamt
European Patent Office
Office européen des brevets

(11) **EP 1 747 961 B1**

(12) **EUROPEAN PATENT SPECIFICATION**

(45) Date of publication and mention
of the grant of the patent:
**23.11.2016 Bulletin 2016/47**

(51) Int Cl.:
***B61G 11/16*** *(2006.01)*    ***B61D 15/06*** *(2006.01)*
***B61F 1/08*** *(2006.01)*    ***B62D 21/15*** *(2006.01)*

(21) Application number: **05025527.2**

(22) Date of filing: **23.11.2005**

(54) **Impact energy absorbing device for a vehicle**

Stoßenergieabsorbierende Vorrichtung für ein Fahrzeug

Dispositif d'absorption de l'énergie d'impact pour un véhicule

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **26.07.2005 EP 05016199**

(43) Date of publication of application:
**31.01.2007 Bulletin 2007/05**

(73) Proprietor: **Bombardier Transportation GmbH
13627 Berlin (DE)**

(72) Inventor: **Fraikin, Bruno
59700 Marcq en Baroeul (FR)**

(74) Representative: **Cohausz & Florack
Patent- & Rechtsanwälte
Partnerschaftsgesellschaft mbB
Bleichstraße 14
40211 Düsseldorf (DE)**

(56) References cited:
**EP-A- 0 831 005    DE-A1- 19 526 119
DE-A1- 19 814 842    DE-A1- 19 947 245**

**Description**

The invention relates to an impact energy absorbing device for a vehicle, in particular for a rail vehicle, comprising a plurality of elongated first energy absorbing elements, each of the energy absorbing elements having a longitudinal axis, a contact end facing an impact partner and a mounting end facing the vehicle. Each of the absorbing elements is adapted to be deformed in a defined manner along its longitudinal axis in an impact process with the impact partner. Each of the energy absorbing elements has a force to stroke characteristic, the force to stroke characteristic representing the course of the deformation force along the longitudinal axis versus the length reduction of the respective one of the energy absorbing elements during the impact process. Furthermore, each of the force to stroke characteristic comprises a plurality of adjacent force peaks. The invention also relates to a corresponding vehicle comprising such an impact energy absorbing device.

Modern rail vehicles usually are equipped with exchangeably mounted impact energy absorbing devices undergoing a defined irreversible deformation upon an abnormal impact with an impact partner, the impact energy of the abnormal impact exceeding the impact energy to be expected during normal operation of the vehicle, e.g. during so called service collisions. Such generic impact energy absorbing devices are known, for example, from DE 201 17 536 U1 and EP 0 831 005 A2. The known impact energy absorbing devices comprise one or more generally tubular energy absorbing elements that are compressed along their longitudinal axis thereby undergoing a local folding or buckling process of their outer shell that progresses along the longitudinal axis.

An example of impact energy absorbing device for vehicles with a controlled buckling process is disclosed in DE 198 14 842 A1.

On the one hand, the defined deformation dissipates impact energy and, thus, reduces the accelerations and, thus, the loads that the remaining structure of the vehicle as well as its eventual passengers undergo in such an abnormal impact event. Furthermore, the defined deformation of the exchangeably mounted impact energy absorbing devices occurs before other non or less easily exchangeable parts of the vehicle are deformed. Thus, in cases with a sufficiently low impact energy, only the impact energy absorbing devices and, eventually, other easily exchangeable parts of the vehicle, e.g. corresponding components of an outer vehicle shell, undergo deformation and damage, respectively. Thus, vehicle repair after such an abnormal impact event is greatly facilitated reducing down times of the vehicle.

In the past, the known impact energy absorbing devices have been tested based on the assumption that no vertical offset exists between the contact element of the respective impact energy absorbing device and a contact part, eventually a further contact element of a further impact energy absorbing device, of the impact partner. In the meantime, it has turned out that this assumption does not sufficiently correspond to the real impact conditions. In reality, vertical offsets between the contact elements of the impact energy absorbing devices of the impact partners may range up to 40 mm. Thus, for example, the European Committee for Standardization is currently drafting a new European Standard relating to the crashworthiness requirements for railway vehicle bodies requiring that the required validation process (simulation) demonstrates that, with an initial vertical offset of 40 mm at the point of impact, contact of at least one wheelset of every bogie is maintained with the track throughout the collision simulation (see European Standard Draft prEN 15227, Railway applications - Crashworthiness requirements for railway vehicle bodies, Section 7.2, European Committee for Standardization, April 2005)

Such a vertical offset poses several problems. A major one is that a considerable bending moment about a horizontal axis perpendicular to the longitudinal axis of the impact energy absorbing device is introduced via the contact element into the impact energy absorbing device. This bending moment may lead to global bending of the impact energy absorbing device along its longitudinal axis and a reduction or even disruption of the even local buckling process.

As a consequence of the global bending, the contact elements may perform a rotation about this horizontal axis up to a point where the shear forces acting in the contact plane of the contact elements exceed the frictional or other holding forces acting in this contact plane. In this case the contact elements may come out of engagement leading to a climbing process between the two impact partners. Given a sufficient angle of rotation of the contact elements, this may even occur when the contact elements have so called anti-climbing means, e.g. one or several ribs leading to a positive connection of the contact elements in a direction parallel to the contact plane.

As a further consequence of the global bending and the reduction or even disruption of the local buckling process, a considerable reduction in the energy absorption capacity of the impact energy absorbing device occurs leading to higher accelerations and loads acting on the remaining vehicle structure and the passengers.

It is thus an object of the present invention to provide an impact energy absorbing device that, at least to some extent, overcomes the above disadvantages. It is a further object of the present invention to provide an impact energy absorbing device that at least reduces the risk of global buckling of the impact energy absorbing device at an impact with lateral offset, i.e. vertical and/or horizontal transverse offset, of the impact partners.

The above objects are achieved, starting from an impact energy absorbing device according to the preamble of claim 1, by the features of the characterizing part of claim 1.

The present invention is based on the technical teaching that at least a reduction of the risk of global buckling of the impact energy absorbing device at an impact with lateral offset of the impact partners is achieved when the energy absorbing elements are arranged and/or adapted such that the adjacent force peaks of at least a first one of the force to stroke characteristics are shifted with respect to the adjacent force peaks of a second one of the force to stroke characteristics.

This shift of the force peaks of the force to stroke characteristics along the length reduction axis has the beneficial effect that the variation in the deformation force, i.e. the amplitude of the variation of the deformation force about an average value, is reduced leading to an elevated minimum deformation force with respect to conventional systems where the lower minimum deformation forces favor global buckling. In other words, while eventually showing a comparable average deformation resistance or axial rigidity, the impact energy absorbing device according to the invention, compared to conventional systems, show a considerably lower variation of the deformation resistance or axial rigidity and, thus, are less prone to global buckling.

The shift of the force peaks of the force to stroke characteristics may be selected in any suitable manner. Preferably, the adjacent force peaks of the force to stroke characteristics are shifted such that the adjacent force peaks of the other ones of the force to stroke characteristics are located mutually shifted between the adjacent force peaks of the first force to stroke characteristic. Thus, especially favorable total force to stroke characteristics of the impact energy absorbing device showing little force variations, i.e. little force amplitudes, may be achieved. The mutual shift may be selected as a function of the respective force to stroke characteristic, in particular as a function of its amplitude and its first and/or second derivatives, in order to achieve a total force to stroke characteristics of the impact energy absorbing device showing as little force variation, i.e. force amplitudes, as possible.

It will be appreciated in this context that the term "lateral offset", in the sense of the invention, designates any offset in a direction running transverse to the longitudinal axis. In other words, in a typical coordinate system of a vehicle, the term "lateral offset" may for example designate an offset in a vertical direction and/or in a horizontal transverse direction of the vehicle.

With preferred embodiments of the impact energy absorbing device according to the invention, in particular such variants with energy absorbing elements having similar force to stroke characteristics, it is provided that the adjacent force peaks of the force to stroke characteristics are shifted such that the adjacent force peaks of the other ones of the force to stroke characteristics are substantially evenly distributed between the adjacent force peaks of the first force to stroke characteristic. Thus, favorable total force to stroke characteristics of the impact energy absorbing device showing little force variations, i.e. little force amplitudes, may be achieved.

It will be appreciated that the impact energy absorbing device according to the invention may comprise any desired number of energy absorbing elements. Thus, preferably, a number of N energy absorbing elements is provided. The adjacent force peaks of the force to stroke characteristics, at least in a first area, are substantially regularly spaced by a first distance S. Subsequent force peaks of subsequent ones of the force to stroke characteristics, at least in the first area, are substantially regularly spaced by a second distance D being calculated as:

$$D = \frac{S}{N}. \qquad\qquad (1)$$

Thus, evenly spaced force peaks of subsequent ones of the force to stroke characteristics may be achieved. In the most simple case, only two energy absorbing elements may be provided leading to a configuration where the force peaks of the second force to stroke characteristic are located halfway between the force peaks of the first force to stroke characteristic.

It will be appreciated that Equation (1) does not necessarily have to be fulfilled exactly and that the distance S and the distance D do not necessarily have to be exactly kept. Rather the primary goal is to achieve a total force to stroke characteristic of the impact energy absorbing device showing as little force variations, i.e. as little force variation amplitudes, as possible.

With preferred embodiments of the impact energy absorbing device according to the invention, the energy absorbing elements have a total force to stroke characteristic, said total force to stroke characteristic resulting from an overlay of the force to stroke characteristics. The total force to stroke characteristic, at least in a first area, has a maximum total force variation amplitude and the force to stroke characteristics, at least in the first area, have a maximum individual force variation amplitude, the maximum total force variation amplitude being smaller than the maximum individual force variation amplitude. Here again, favorable total force to stroke characteristics of the impact energy absorbing device showing as little force variations, i.e. as little force variation amplitudes, as possible may be achieved.

The first area may extend over substantially the entire force to stroke characteristic. Preferably; the first area is at least an area where the force to stroke characteristics have a substantially sinusoidal course, in particular a course with substantially regular peaks and valleys. Such a sinusoidal course usually is shown in the area where the local buckling or folding of the energy absorbing element occurs.

The shift between the force to stroke characteristics may be achieved by any suitable means. The design of the absorbing elements may be selected such that their force to stroke characteristics show the desired shift.

With further preferred impact energy absorbing devices according to the invention, a first energy absorbing element has the first force to stroke characteristic and a second energy absorbing element has the second force to stroke characteristic. The first energy absorbing element has a first deformation resistance along its longitudinal axis while the second energy absorbing element, in a first section at its contact end, has a second deformation resistance along its longitudinal axis and, in a second section, has a third deformation resistance along its longitudinal axis. The second deformation resistance is selected to be different from the first deformation resistance leading to a different deformation behavior at the onset of the deformation, which may be used to achieve the desired shift within the force to stroke characteristics. Preferably, the second deformation resistance is different from the third deformation resistance. Furthermore, preferably, the second deformation resistance is lower than at least one of the first deformation resistance and the third deformation resistance.

In general, an arbitrary number of energy absorbing elements may be mutually associated. Preferably, a pair-wise association is selected leading to a good and adjustable deformation behavior at a very simple and easily adjustable design. Thus, with preferred impact energy absorbing devices according to the invention, a first energy absorbing element has the first force to stroke characteristic and a second energy absorbing element has the second force to stroke characteristic, a first energy absorbing element pair being formed by the first energy absorbing element and the second energy absorbing element.

The energy absorbing elements may be of any suitable shape. Preferably, at least one of the first energy absorbing element and the second energy absorbing element has a substantially tubular shape, since such tubular energy absorbing elements show very good and reliable deformation properties.

Preferably, at least one of the first energy absorbing element and the second energy absorbing element is arranged within the other one of the first energy absorbing element and the second energy absorbing element. In particular, the first energy absorbing element and the second energy absorbing element are arranged concentrically. This leads to a very compact and, thus, favorable design.

With preferred impact energy absorbing devices according to the invention, the first energy absorbing element and the second energy absorbing element have a rectangular cross section and spacer elements extend between adjacent corners of the first energy absorbing element and the second energy absorbing element and along the longitudinal axes. This provides good stabilization of the arrangement while substantially not influencing the deformation behavior.

With further favorable impact energy absorbing devices according to the invention, a plurality of stiffening elements is provided. The stiffening elements are located within an inner absorbing device space defined by the outer one of the energy absorbing elements, the stiffening elements being mutually spaced apart along the first longitudinal axis and extending in a plane transverse to the first longitudinal axis. These stiffening elements on the one hand ensure proper local buckling. The pitch between adjacent stiffening elements may be selected to define the distance between subsequent force peaks of the respective force to stroke characteristic. The pitch between adjacent stiffening elements also has an influence on the force amplitude of the respective force to stroke characteristic and may, thus, be selected accordingly. Furthermore, the stiffening elements may ensure the proper shift between the force peaks of the force to stroke characteristics.

With further impact energy absorbing devices according to the invention, which are favorable due to their good and reliable deformation behavior, at least the inner one of the energy absorbing elements tapers towards its contact end.

With other impact energy absorbing devices according to the invention, the first energy absorbing element and the second energy absorbing element are arranged laterally offset. Thus, where sufficient space is available, a very simple design may be realized. Preferably, a second energy absorbing element pair is provided, said second energy absorbing element pair being arranged laterally offset with respect to the first energy absorbing element pair. This second pair may be of similar or even identical design as the first energy absorbing element pair but arranged such that it balances uneven force distributions and moments resulting therefrom that are due to the different deformation behavior of the energy absorbing elements of the first energy absorbing element pair.

Preferably, at least one of the energy absorbing elements has pre-deformed areas at its contact end, said pre-deformed areas being adapted to reduce an initial force peak of its force to stroke characteristic. In particular, the pre-deformed areas are formed by transverse indentations of the energy absorbing element. It will be appreciated that the shape of the pre-deformed areas is as close as possible to the shape of the deformation the energy absorbing element would undergo in an impact process. Thus, a smooth but effective deformation with little global buckling risk may be achieved.

According to the invention, a contact element is mounted to a plurality of said energy absorbing elements at said contact end. In particular, the contact element comprises anti-climbing means, in particular at least one anti-climbing rib, in order to efficiently prevent climbing processes under any circumstances.

The invention further relates to a vehicle, in particular a rail vehicle, comprising an impact energy absorbing device according to the invention.

Further embodiments of the present invention will become apparent from the dependent claims and the following description of examples and preferred embodiments of the invention which refers to the appended figures. It is shown in:

Figure 1    a schematic representation of an impact energy absorbing device for a rail vehicle;

Figure 2    a schematic partially sectional representation of a detail of the impact energy absorbing device of Figure 1;

Figure 3    a schematic representation of the force to stroke characteristics of the first and second energy absorbing element of Figure 1;

Figure 4    a schematic representation of the total force to stroke characteristic of the energy absorbing device of Figure 1;

Figure 5    a schematic partially sectional representation of a further impact energy absorbing device for a rail vehicle;

Figure 6    a schematic partially sectional representation of the impact energy absorbing device along line VI-VI of Figure 5;

Figure 7    a schematic perspective view of a preferred embodiment of an impact energy absorbing device for a rail vehicle according to the invention.

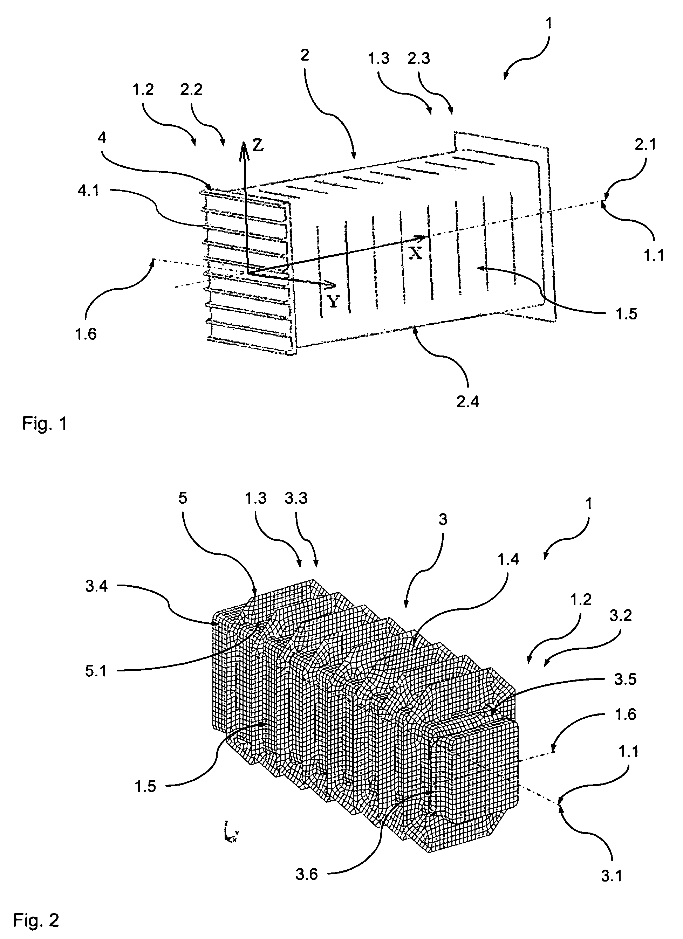

In the following an impact energy absorbing device 1 for a rail vehicle that is not part of the present invention will be described with reference to Figure 1 to 4. Figure 1 shows a schematic representation the impact energy absorbing device 1, while Figure 2 is a schematic partially sectional representation of a detail of the impact energy absorbing device 1 of Figure 1.

The impact energy absorbing device 1 has a longitudinal device axis 1.1 and comprises an elongated first energy absorbing element 2, an elongated second energy absorbing element 3 and a contact element 4. The first energy absorbing element 2 and the second energy absorbing element 3 form an energy absorbing element pair. The impact energy absorbing device 1 has a contact end 1.2 facing an impact partner and a mounting end 1.3 facing a vehicle - not shown - to which the impact energy absorbing device 1 is mounted.

The first energy absorbing element 2 has a first longitudinal axis 2.1 (X-axis), a contact end 2.2 facing an impact partner and a mounting end 2.3 facing a vehicle - not shown - to which the impact energy absorbing device 1 is mounted. A mounting flange is provided at the mounting end 2.3 for mounting the energy absorbing element 2 to the vehicle.

The second energy absorbing element 3 has a second longitudinal axis 3.1 (X-axis), a contact end 3.2 facing an impact partner and a mounting end 3.3 facing the vehicle - not shown - to which the impact energy absorbing device 1 is mounted. A mounting flange is provided at the mounting end 3.3 for mounting the energy absorbing element 3 to the vehicle. Preferably, the first energy absorbing element 2 and the second energy absorbing element 3 have a common mounting flange.

The contact element 4 is mounted to the first energy absorbing element 2 at its contact end 2.2 while a gap is formed between the rear face of the contact element 4 and the contact end 3.2 of the second energy absorbing element 3. The contact element 4 has the shape of a plate carrying horizontal ribs 4.1 forming an anti-climbing device.

The first energy absorbing element 2 has a tubular first outer shell 2.4 of rectangular cross section that defines an inner absorbing device space 1.4. The second energy absorbing element 3 is arranged within this inner absorbing device space 1.4 and has a tubular second outer shell 3.4 of rectangular cross section that tapers towards the contact end 3.2. The first outer shell 2.4 and the second outer shell 3.4 are arranged concentrically. Thus, the first longitudinal axis 2.1 and the second longitudinal axis 3.1 are collinear, both defining the longitudinal device axis 1.1.

As can be seen from Figure 2 - where the first outer shell 2.4 of the first energy absorbing element 2 is omitted for reasons of better visibility - a plurality of stiffening elements in the form of stiffening plates 5 is provided within this inner absorbing device space 1.2. The stiffening plates 5 are connected, e.g. welded, to the first outer shell 2.4 and the second outer shell 3.4. The stiffening plates 5 are evenly spaced along the first longitudinal axis 2.1, such that a plurality of energy absorbing segments 1.5 are consecutively formed along the longitudinal device axis 1.1 between adjacent stiffening plates 5.

In an impact process, starting at the contact end 1.2, the first outer shell 2.4 and the second outer shell 3.4 are deformed in defined manner to absorb impact energy. The first outer shell 2.4 and the second outer shell 3.4 successively locally buckles from segment 1.5 to segment 1.5. In other words, the energy absorbing segments 1.5 successively collapse in the direction of the longitudinal device axis 1.1. The stiffening plates 5 hereby promote a local buckling process that is as even as possible. With this segment wise local buckling, the first energy absorbing element 2 and the second energy absorbing element 3 are successively compressed, i.e. the length of the first energy absorbing element 2 along its first longitudinal axis 2.1 as well as the length of the second energy absorbing element 3 along its second longitudinal axis 3.1 is successively reduced, while the impact energy is absorbed. It will be appreciated that the first outer shell 2.4 and the second outer shell 3.4 are spaced apart such that they substantially do not interfere in the local buckling process.

In an offset impact situation, where there is a lateral offset - e.g. a vertical offset (along the Z-axis in Figure 1 and 2) - between the impact partners, the longitudinal device axes 1.1 of the energy absorbing devices 1 are laterally offset as well. As a consequence of the laterally offset axial impact forces, a considerable bending moment about a first transverse axis 1.6 (Y-axis) is introduced into the respective energy absorbing device 1 via the contact element 4.

In conventional systems, this bending moment causes an uneven distribution of the compressive forces that act within the cross section of the outer shell of the energy absorbing element. Depending on the offset and the impact energy, this may lead to a situation where the local buckling in the energy absorbing segments occurs only or predominantly on the side (e.g. the lower side) where the compressive forces are increased due to the bending moment. On the other side (e.g. the upper side), where the compressive forces are reduced due to the bending moment, the sections of the outer shell may remain essentially straight. If this happens, global buckling of the energy absorbing element extending over a large number of energy absorbing segments occurs leading to a progressive rotation of the contact element about this first transverse axis. This progressive rotation of the contact element further aggravates global buckling of the energy absorbing element.

As explained above, as a consequence of such a global buckling, the contact elements may perform a rotation about this first transverse axis up to a point where the shear forces acting in the contact plane of the contact elements exceed the frictional and the holding forces of the anti-climbing means acting in this contact plane. In this case the contact elements, despite the presence of the anti-climbing means, may come out of engagement leading to a climbing process between the two impact partners.

A further consequence of such a global buckling process is a considerable reduction in the energy absorption capacity of the impact energy absorbing device leading to higher accelerations and loads acting on the remaining vehicle structure and the passengers.

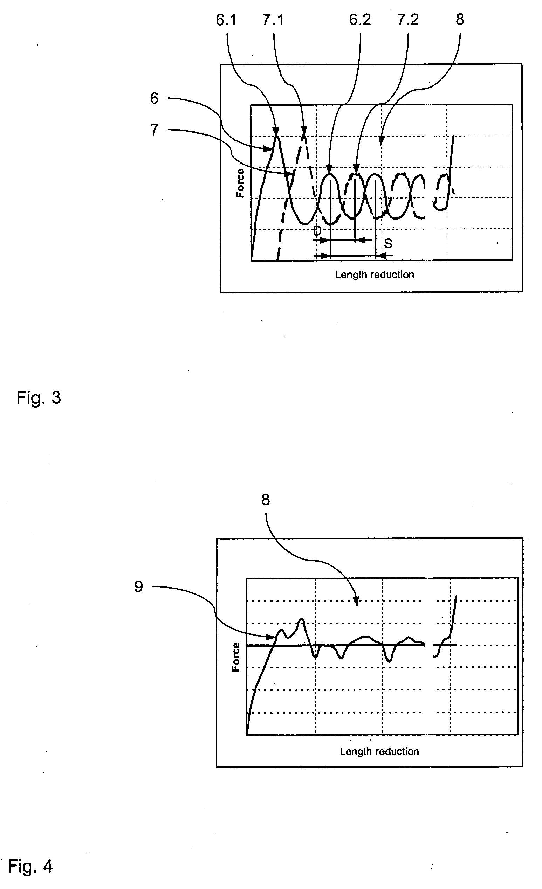

To avoid this undesired scenario, the first energy absorbing element 2 and the second energy absorbing element 3 are arranged and adapted such that their force to stroke characteristics 6 and 7 are offset as will be explained in detail in the following with reference to Figure 3 and 4.

The first energy absorbing element 2 has a first force to stroke characteristic 6 while the second energy absorbing element 3 has a second force to stroke characteristic 7. The force to stroke characteristics 6 and 7 represent the course of the deformation force along the longitudinal axis versus the length reduction of the respective one of the energy absorbing element 2 and 3 during an impact process.

The force to stroke characteristics 6 and 7 have an initial force peak 6.1 and 7.1 at the onset of deformation. As deformation, i.e. local buckling, proceeds the force to stroke characteristics 6 and 7, in a first area 8, have a sinusoidal course with consecutive force peaks 6.2 and 7.2, respectively. Adjacent force peaks 6.2 of the first force to stroke characteristic 6 have a distance S that is approximately the same throughout the first area 8. The same applies to adjacent force peaks 7.2 of the second force to stroke characteristic 7 having also a distance that is approximately S and that is approximately the same throughout the first area 8.

The force peaks 6.2 and the force peaks 7.2 are shifted along the length reduction axis such that, in the first area 8, a force peak 7.2 is located approximately halfway between two consecutive force peaks 6.2. Thus, the distance D between a force peak 6.2 and the adjacent force peak 7.2 is approximately half of the pitch S.

Figure 4 shows the total force to stroke characteristic 9 of the impact energy absorption device 1 that results from the overlay of the force to stroke characteristics 6 and 7. As can be seen from Figure 4, the shift between the force to stroke characteristics 6 and 7 leads to a total force to stroke characteristic 9 showing little force variations, i.e. little force variation amplitudes. In particular, the force variation amplitudes are considerably less than the force variation amplitudes of the individual force to stroke characteristics 6 and 7.

As explained above, this shift of the force peaks 6.2 and 7.2 of the force to stroke characteristics 6 and 7 along the length reduction axis has the beneficial effect that the variation in the total deformation force, i.e. the amplitude of the deformation force variation, is reduced leading to an elevated minimum deformation force with respect to conventional systems where the lower minimum deformation forces favor global buckling. In other words, while eventually showing a comparable average deformation resistance or axial rigidity, the impact energy absorbing device 1, compared to conventional systems, shows a considerably lower variation of the deformation resistance or axial rigidity and, thus, is less prone to global buckling.

It will be appreciated that the mutual shift of the force peaks 6.2 and the force peaks 7.2 may be selected as a function of the respective force to stroke characteristic, in particular as a function of its amplitude and its first and/or second derivatives, in order to achieve a total force to stroke characteristic 9 of the impact energy absorbing device showing as little force variation, i.e. force variation amplitudes, as possible.

The offset in the force peaks 6.2 and the force peaks 7.2 is achieved by the gap - extending along the longitudinal device axis 1.1 - between the rear face of the contact element 4 and the contact end 3.2 of the second energy absorbing element 3. In an impact situation, this leads to delayed contact between the rear face of the contact element 4 and the contact end 3.2 of the second energy absorbing element 3 and, thus, to a delayed onset of and rise in the deformation resistance of the second energy absorbing element 3.

The second energy absorbing element 3 has pre-deformed areas formed by indentations 3.5 and 3.6 introduced into the second outer shell 3.4 upon manufacture. The indentations 3.5 are formed on the upper and lower side of the second outer shell 3.4. They extend inwards and in a plane perpendicular to the second longitudinal axis 3.1.

The indentations 3.6 are formed on the lateral sides of the second outer shell 3.4. They extend outwards and in a plane perpendicular to the second longitudinal axis 3.1. The indentations 3.5 and 3.6 simulate an approximately halfway proceeded local buckling process where the deformation resistance of the second energy absorbing element 3 is considerably reduced.

It will be appreciated that, the pre-deformed areas formed by the indentations 3.5 and 3.6 serve to reduce the initial force peak of the respective force to stroke characteristic.

However, it will be appreciated that, with certain embodiments of the invention, a similar offset in the force peaks 6.2 and the force peaks 7.2 may also be achieved via the pre-deformed areas of the second energy absorbing element 3 formed by the indentations 3.5 and 3.6 introduced into the second outer shell 3.4.

It will be further appreciated that, with certain embodiments of the invention, other ways may be chosen to achieve this offset in the force peaks 6.2 and the force peaks 7.2 as will be seen from the following description of preferred embodiments of the invention. Furthermore, it will be appreciated that the stiffening plates 5, while promoting the local buckling process to be as even as possible, do not influence the offset in the force peaks 6.2 and the force peaks 7.2. This is due to the compliance of the stiffening plates 5 along the longitudinal device axis 1.1 generating only little resistance to a relative movement between its connection points to the first energy absorbing element 2 and to the second energy absorbing element 3. In addition, the stiffening plates 5 are mounted to the second energy absorbing element 3 via a plurality of protrusions 5.1 that may shear off upon a certain amount of relative movement between its connection points to the first energy absorbing element 2 and to the second energy absorbing element 3 further reducing resistance to this relative movement.

The energy absorbing device 1 has a total length along the longitudinal device axis 1.1 of about 1200 mm and a total width along the first transverse axis 1.6 of about 520 mm. However, it will be appreciated that with other embodiments of the invention, other dimensions may be chosen according to the requirements of the design and the expected load situation. The gap between the rear face of the contact element 4 and the contact end 3.2 of the second energy absorbing element 3 has a length along the first longitudinal axis 2.1 of about 1150 mm. However, it will be appreciated that other dimensions may be chosen according to the requirements of the design and the expected load situation.

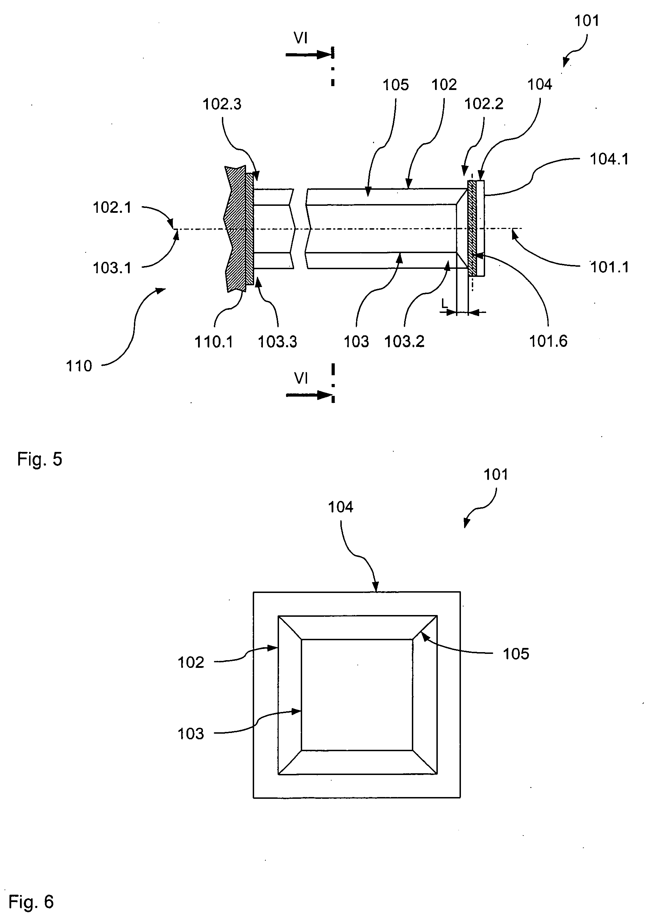

In the following a second example of an impact energy absorbing device 101 for a rail vehicle, which is not part of the present invention, will be described with reference to Figure 5 and 6. Figure 5 shows a schematic partially sectional representation the impact energy absorbing device 101 while Figure 6 is a schematic sectional representation of the impact energy absorbing device 101 of Figure 5. The impact energy absorbing device 101 is particularly suitable for applications where only little space is available.

The impact energy absorbing device 101 comprises a first elongated energy absorbing element 102, a second elongated energy absorbing element 103 and a contact element 104. The energy absorbing elements 102 and 103 have a longitudinal axis 102.1 and 103.1 (X-axis), a contact end 102.2 and 103.2 facing an impact partner and a mounting end 102.3 and 103.3 facing a structural element 110.1 of vehicle 110 to which the impact energy absorbing device 101 is mounted. A mounting flange is provided at the mounting end 102.3 for mounting the energy absorbing elements 102 and 103 to the vehicle 110.

The first energy absorbing element 102 and the second energy absorbing element 103 are both of tubular shape and have a rectangular cross section (see Figure 6). They form an energy absorbing element pair and are arranged such that the second energy absorbing element 103 is located concentrically within the first energy absorbing element 102.

Spacer elements in the form of spacer plates 105 are provided between adjacent corners of the first energy absorbing element 102 and the second energy absorbing element 103. These spacer plates 105 provide good stabilization of the arrangement while, due to their position, substantially not influencing the deformation behavior of the first energy absorbing element 102 and the second energy absorbing element 103. However, of course, the spacer plates 105 contribute to the impact energy absorbing properties of the impact energy absorbing device 101.

At their mounting end 102.3 and 103.3, the first energy absorbing element 102 and the second energy absorbing element 103 are mounted to the flange portion of the impact energy absorbing device 101.

The contact element 104 however is mounted only to the first energy absorbing element 102 at its contact end 102.2. The second energy absorbing element 103 is slightly shorter than the first energy absorbing element 102. Thus, the contact end 103.2 of the second energy absorbing element 103, along its longitudinal axis 103.1, is spaced by a distance L from the contact element 104.

It will be appreciated that the first energy absorbing element 102 and the second energy absorbing element 103 may show the individual first and second force to stroke characteristic 6 and 7 as they have been described above in the context of Figures 3 and 4 as well as a total force to stroke characteristic similar to the total force to stroke characteristic 9 as it has been described above in the context of Figures 3 and 4 but differing by the contribution of the spacer plates 105. The spaced arrangement of the contact end 103.2 of the second energy absorbing element 103 with respect to the contact element 104 thereby provides for the shift between the first and second force to stroke characteristic 6 and 7 as it has been described above in the context of Figures 3 and 4. Thus, it is here mainly referred to the above explanations. It shall only be mentioned that the shift between the first and second force to stroke characteristic 6 and 7 again largely reduces the force variation amplitude of the total force to stroke characteristic 9 and, thus, considerably reduces the risk of global buckling at an impact event with lateral offset, e.g. vertical and/or transverse horizontal offset.

The contact element 104 again has the shape of a plate carrying horizontal ribs 104.1 forming an anti-climbing device to further reduce the risk of a situation where climbing occurs between the impact partners.

It will be appreciated that, with certain embodiments of the invention, instead of the free space between the contact end of the second energy absorbing element and the contact element, this space may be taken by a solid spacer or the like, while providing a similar shift in the first and second force to stroke characteristic.

It will be appreciated that the shift in the first and second force to stroke characteristic may be achieved via pre-deformed areas of the first and/or second energy absorbing element formed by indentations similar to the indentations 3.5 and 3.6 described above.

It is to be further noted that, with certain embodiments of the invention, the delayed rise in the deformation resistance does not necessarily have to occur within the second energy absorbing element, i.e. the inner energy absorbing element. It may also occur within the first energy absorbing element, i.e. the outer energy absorbing element.

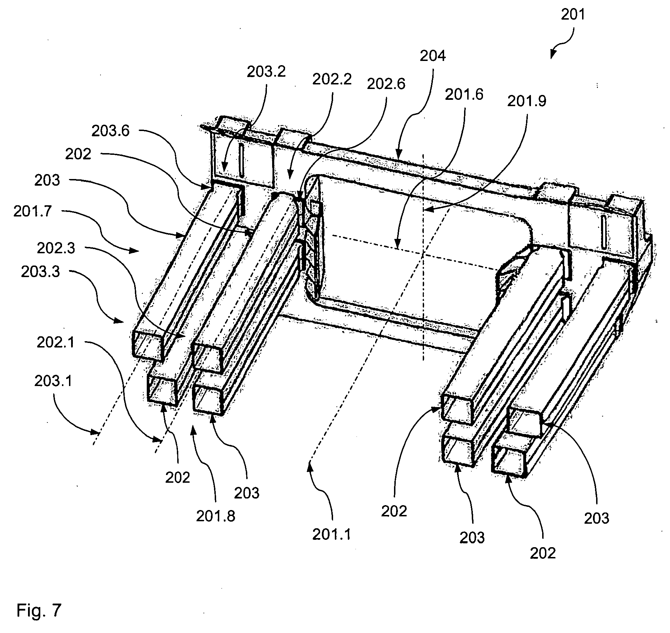

In the following a preferred embodiment of an impact energy absorbing device 201 for a rail vehicle according to the invention will be described with reference to Figure 7. Figure 7 shows a schematic perspective view of the impact energy absorbing device 201.

The impact energy absorbing device 201 has a longitudinal device axis 201.1 and comprises a first elongated energy absorbing element 202, a second elongated energy absorbing element 203 and a contact element 204. The energy absorbing elements 202 and 203 form a first energy absorbing element pair 201.7.

The energy absorbing elements 202 and 203 have a longitudinal axis 202.1 and 203.1 (X-axis), a contact end 202.2 and 203.2 facing an impact partner and a mounting end 202.3 and 203.3 facing a vehicle - not shown - to which the impact energy absorbing device 201 is mounted.

The first energy absorbing element 202 and the second energy absorbing element 203 are both of tubular shape and have a substantially identical rectangular cross section and a substantially identical length along their longitudinal axes 202.1 and 203.1. They are arranged laterally offset along a transverse device axis 201.6 such that their longitudinal axes 202.1 and 203.1 are parallel with respect to each other and with respect to the longitudinal device axis 201.1.

At their mounting end 202.3 and 203.3, the first energy absorbing element 202 and the second energy absorbing element 203 are mounted to a flange portion - not shown - of the impact energy absorbing device 201. At their contact end 202.2 and 203.2, the first energy absorbing element 202 and the second energy absorbing element 203 are mounted to the contact element 204.

At their contact end 202.2 and 203.2, the first energy absorbing element 202 and the second energy absorbing element 203 have pre-deformed areas formed by lateral indentations 202.6 and 203.6. The lateral indentations 202.6 of the first energy absorbing element 202 are located closer to the contact end 202.2 than the lateral indentations 203.6 of the second energy absorbing element 203. Thus, the length of the lateral indentations 202.6 of the first energy absorbing element 202 along the longitudinal device axis 201.1 is smaller than the length of the lateral indentations 203.6 of the second energy absorbing element 203.

It will be appreciated that the first energy absorbing element 202 and the second energy absorbing element 203 may show the individual first and second force to stroke characteristic 6 and 7 as they have been described above in the context of Figures 3 and 4. Thus, the first energy absorbing element pair 201.7 shows the total force to stroke characteristic 9 as it has been described above in the context of Figures 3 and 4. The smaller length of the lateral indentations 202.6 of the first energy absorbing element 202 compared to the length of the lateral indentations 203.6 of the second energy absorbing element 203 thereby provides for the shift between the first and second force to stroke characteristic 6 and 7 as it has been described above in the context of Figures 3 and 4. Thus, it is here be mainly referred to the above explanations. It shall only be mentioned that the shift between the first and second force to stroke characteristic 6 and 7 again largely reduces the force variation amplitude of the total force to stroke characteristic 9 and, thus, considerably reduces the risk of global buckling at an impact event with lateral offset.

A second energy absorbing element pair 201.8 is formed by a further first energy absorbing element 202 and a further second energy absorbing element 203 identical to the ones of the first energy absorbing element pair 201.7. The second energy absorbing element pair 201.8 and the first energy absorbing element pair 201.7 are arranged laterally offset along a height axis 1.9 such that the longitudinal axes of the first energy absorbing element 202 and the further second energy absorbing element 203 of the second energy absorbing element pair 201.8 are parallel with respect to each other and with respect to the longitudinal device axis 201.1.

The second energy absorbing element pair 201.8 is arranged to be rotated about 180° about the longitudinal device axis 201.1 such that the second energy absorbing element 203 of the second energy absorbing element pair 201.8 is adjacent to the first energy absorbing element 202 of the first energy absorbing element pair 201.7 and the first energy absorbing element 202 of the second energy absorbing element pair 201.8 is adjacent to the second energy absorbing element 203 of the first energy absorbing element pair 201.7.

This rotated arrangement of the pair absorbing element pairs 201.7 and 201.8 provides that uneven force distributions and moments resulting therefrom that are due to the different deformation behavior of the first and second energy absorbing elements 202 and 203 are substantially balanced.

Further first and second energy absorbing elements 202 and 203 are arranged in a manner symmetric to the center plane of the impact energy absorbing device 201, the center plane being defined by the axes 201.1 and 201.9.

The contact element 204 has the shape of a frame carrying suitable anti-climbing devices to further reduce the risk of a situation where climbing occurs between the impact partners.

In the foregoing, the invention has been described with reference to embodiments where pairs of two energy absorbing elements having shifted force to stroke characteristics have been used. However, it will be appreciated that, with other embodiments of the invention, another number of energy absorbing elements having mutually shifted force to stroke characteristics may be selected.

The first energy absorbing element 202 has a total length along the longitudinal device axis 201.1 of about 1250 mm and a total width along the transverse device axis 201.6 of about 150 mm. However, it will be appreciated that with other embodiments of the invention, other dimensions may be chosen according to the requirements of the design and the expected load situation. The lateral axis-to-axis offset between the first energy absorbing element 202 and the second energy absorbing element 203 along the transverse device axis 201.6 is about 420 mm. However, it will be appreciated that with other embodiments of the invention, other offsets may be chosen according to the requirements of the design and the expected load situation.

It will be further appreciated that the energy absorbing elements do not necessarily have to be a segmented body made out of a plurality of relatively thin wall elements. For example, it is also possible that at least one of the energy absorbing element is formed by a monolithic body made out of an energy absorbing material such as aluminum foam, a honeycomb structure or the like. In particular, aluminum foam or honeycomb structures may be used to adapt the impact response of the energy absorbing elements to the vehicle design. For example, instead of the tubular elements described hereinbefore, tubular or solid rods of aluminum foam may be used. However, for example, such a monolithic body may be provided with outer shell elements and/or inner shell elements.

## Claims

1. Impact energy absorbing device for a vehicle, in particular for a rail vehicle, comprising:

   - a plurality of elongated first energy absorbing elements (202, 203);
   - each of said energy absorbing elements (202, 203) having a longitudinal axis (202.1; 203.1), a contact end (202.2; 203.2) facing an impact partner and a mounting end (202.3; 203.3) facing said vehicle;
   - each of said absorbing elements (202, 203) being adapted to be deformed in a defined manner along its longitudinal axis (202.1; 203.1) in an impact process with said impact partner;
   - each of said energy absorbing elements (202, 203) having a force to stroke characteristic, said force to stroke characteristic representing the course of the deformation force along said longitudinal axis (202.1; 203.1) versus the length reduction of the respective one of said energy absorbing elements (202, 203) during said impact process;
   - each of said force to stroke characteristic comprising a plurality of adjacent force peaks;

   **characterized in that**

   - said energy absorbing elements (202, 203) are connected at their contact ends (202.2; 203.2) by means of a contact element (204) such that they have a simultaneous onset of said deformation force and
   - said energy absorbing elements (202, 203) are arranged and/or adapted such that said adjacent force peaks of at least a first one of said force to stroke characteristics are shifted with respect to said adjacent force peaks of a second one of said force to stroke characteristics.

2. Impact energy absorbing device according to claim 1, **characterized in that** said adjacent force peaks of said force to stroke characteristics are shifted such that said adjacent force peaks of the other ones of said force to stroke characteristics are located mutually shifted between said adjacent force peaks of said first force to stroke characteristic.

3. Impact energy absorbing device according to claim 1 or 2, **characterized in that** said adjacent force peaks of said force to stroke characteristics are shifted such that said adjacent force peaks of the other ones of said force to stroke characteristics are evenly distributed between said adjacent force peaks of said first force to stroke characteristic.

4. Impact energy absorbing device according to any one of the preceding claims, **characterized in that**

   - a number of N energy absorbing elements (202, 203) is provided;
   - said adjacent force peaks of said force to stroke characteristics, at least in a first area, being substantially regularly spaced by a first distance S;
   - subsequent force peaks of subsequent ones of said force to stroke characteristics, at least in said first area, being substantially regularly spaced by a second distance D being calculated as:

$$D = \frac{S}{N}.$$

5. Impact energy absorbing device according to any one of the preceding claims, **characterized in that**

   - said energy absorbing elements (202, 203) have a total force to stroke characteristic;
   - said total force to stroke characteristic resulting from an overlay of said force to stroke characteristics;
   - said total force to stroke characteristic, at least in a first area, having a maximum total force variation amplitude;
   - said force to stroke characteristics, at least in said first area, having a maximum individual force variation amplitude;
   - said maximum total force variation amplitude being smaller than said maximum individual force variation amplitude.

6. Impact energy absorbing device according to claim 4 or 5, **characterized in that** said first area is an area where said force to stroke characteristics have a substantially sinusoidal course, in particular a course with substantially regular peaks and valleys.

7. Impact energy absorbing device according to any one of the preceding claims, **characterized in that**

   - a first energy absorbing element (202) has said first force to stroke characteristic and a second energy absorbing element (203) has said second force to stroke characteristic;
   - said first energy absorbing element (202) has a first deformation resistance along its longitudinal axis (202.1);
   - said second energy absorbing element (203), in a first section at its contact end, has a second deformation resistance along its longitudinal axis (203.1) and, in a second section, has a third deformation resistance along its longitudinal axis (203.1);
   - said second deformation resistance being different from said first deformation resistance.

8. Impact energy absorbing device according to claim 7, **characterized in that** said second deformation resistance is different from said third deformation resistance.

9. Impact energy absorbing device according to claim 7 or 8, **characterized in that** said second deformation resistance is lower than at least one of said first deformation resistance and said third deformation resistance.

10. Impact energy absorbing device according to any one of the preceding claims, **characterized in that**

    - a first energy absorbing element (202) has said first force to stroke characteristic and a second energy absorbing element (203) has said second force to stroke characteristic;
    - a first energy absorbing element pair (201.7) being formed by said first energy absorbing element (202) and said second energy absorbing element (203).

11. Impact energy absorbing device according to claim 10, **characterized in that** at least one of said first energy absorbing element (202) and said second energy absorbing element (203) has a substantially tubular shape.

12. Impact energy absorbing device according to claim 11, **characterized in that**

    - at least one of said first energy absorbing element and said second energy absorbing element is arranged within the other one of said first energy absorbing element and said second energy absorbing element, wherein,

- in particular, said first energy absorbing element and said second energy absorbing element are arranged concentrically.

13. Impact energy absorbing device according to claim 12, **characterized in that**

- said first energy absorbing element and said second energy absorbing element have a rectangular cross section and
- spacer elements extend between adjacent corners of said first energy absorbing element and said second energy absorbing element and along said longitudinal axes.

14. Impact energy absorbing device according to any one of claims 11 to 13, **characterized in that**

- a plurality of stiffening elements is provided;
- said stiffening elements being located within an inner absorbing device space defined by the outer one of said energy absorbing elements;
- said stiffening elements being mutually spaced apart along said first longitudinal axis and extending in a plane transverse to said first longitudinal axis.

15. Impact energy absorbing device according to any one of claims 11 to 14, **characterized in that** the inner one of said energy absorbing elements tapers towards its contact end.

16. Impact energy absorbing device according to claim 10, **characterized in that** said first energy absorbing element (202) and said second energy absorbing element (203) are arranged laterally offset.

17. Impact energy absorbing device according to claim 16, **characterized in that**

- a second energy absorbing element pair (201.8) is provided;
- said second energy absorbing element pair (201.8) being arranged laterally offset with respect to said first energy absorbing element pair (201.7).

18. Impact energy absorbing device according to any one of the preceding claims, **characterized in that**

- at least one of said energy absorbing elements (202, 203) has pre-deformed areas at its contact end (202.2, 203.2);
- said pre-deformed areas being adapted to reduce an initial force peak of its force to stroke characteristic wherein,
- in particular, said pre-deformed areas are formed by transverse indentations (202.6, 203.6) of said energy absorbing element (202, 203).

19. Impact energy absorbing device according to any one of the preceding claims, **characterized in that**

- a contact element (204) is mounted to at least one of said energy absorbing
- elements (202, 203) at said contact end (202.2, 203.2), wherein,
- in particular, said contact element (204) comprises anti-climbing means (204.1), in particular at least one anti-climbing rib.

20. Vehicle, in particular rail vehicle, comprising an impact energy absorbing device (201) according to any one of the preceding claims.

**Patentansprüche**

1. Stoßenergieabsorptionsvorrichtung für ein Fahrzeug, insbesondere für ein Schienenfahrzeug, umfassend

- eine Mehrzahl von langgestreckten ersten Energieabsorptionselementen (202, 203); wobei
- jedes der Energieabsorptionselemente (202, 203) eine Längsachse (202.1; 203.1), ein einem Stoßpartner zugewandtes Kontaktende (202.2; 203,2) und ein dem Fahrzeug zugewandtes Befestigungsende (202.3; 203.3) aufweist;
- jedes der Absorptionselemente (202, 203) dazu ausgebildet ist, in einem Stoßvorgang mit dem Stoßpartner definierter Weise entlang seiner Längsachse verformt zu werden (202.1; 203.1);
- jedes der Energieabsorptionselemente (202, 203) eine Kraft-zu-Hub-Charakteristik (6, 7) aufweist, wobei die Kraft-zu-Hub-Charakteristik (6, 7) den Verlauf der Deformationskraft entlang der Längsachse (202,1; 203.1) über der Längenreduzierung des jeweiligen Energieabsorptionselements (202, 203) während des Stoßvorganges repräsentiert;
- jede der Kraft-zu-Hub- Charakteristiken eine Mehrzahl von benachbarten Kraftspitzen aufweist;

**dadurch gekennzeichnet, dass**

- die Energieabsorptionselemente (202, 203) an ihrem Kontaktende (202.2; 203,2) über ein Kontaktelement (204) derart verbunden sind, dass sie ein simultanes Einsetzen der Deformationskraft aufweisen, und
- die Energieabsorptionselemente (202, 203) derart angeordnet und/oder, ausgebildet sind, dass die benachbarten Kraftspitzen von wenigstens einer ersten der Kraft-zu-Hub-Charakteristiken in Bezug auf die benachbarten Kraftspitzen einer zweiten der Kraft-zu-Hub-Charakteristiken versetzt sind.

2. Stoßenergieabsorptionsvorrichtung gemäß Anspruch 1, **dadurch gekennzeichnet, dass** die benachbarten Kraftspitzen der Kraft-zu-Hub-Charakteristiken derart versetzt sind, dass die benachbarten Kraftspitzen der anderen Kraft-zu-Hub-Charakteristiken wechselseitig versetzt zwischen den benachbarten Kraftspitzen der ersten Kraft-zu-Hub-Charakteristik liegen.

3. Stoßenergieabsorptionsvorrichtung nach Anspruch 1 oder 2, **dadurch gekennzeichnet, dass** die benachbarten Kraftspitzen der Kraft-zu-Hub-Charakteristiken derart versetzt sind, dass die benachbarten Kraftspitzen der anderen Kraft-zu-Hub-Charakteristiken gleichmäßig verteilt zwischen den benachbarten Kraftspitzen der ersten Kraft-zu-Hub-Charakteristik liegen.

4. Stoßenergieabsorptionsvorrichtung nach einem der vorhergehenden Ansprüche, **dadurch gekennzeichnet, dass**

- eine Anzahl von N Energieabsorptionselementen (202, 203) vorgesehen ist; wobei
- benachbarte Kraftspitzen der Kraft-zu-Hub-Charakteristiken zumindest in einem ersten Bereich im Wesentlichen gleichmäßig um einen ersten Abstand S beabstandet sind;
- aufeinanderfolgende Kraftspitzen aufeinanderfolgender der Kraft-zu-Hub-Charakteristiken zumindest in dem ersten Bereich im Wesentlichen gleichmäßig um einen zweiten Abstand D beabstandet sind, der sich berechnet zu:

$$D = \frac{S}{N}.$$

5. Stoßenergieabsorptionsvorrichtung nach einem der vorhergehenden Ansprüche, **dadurch gekennzeichnet**, -

- die Energieabsorptionselemente (202, 203) eine Gesamt-Kraft-zu-Hub-Charakteristik aufweisen; wobei
- die Gesamt-Kraft-zu-Hub-Charakteristik aus einer Überlagerung der Kraft-zu-Hub-Charakteristiken resultiert;
- die Gesamt-Kraft-zu-Hub-Charakteristik zumindest in einem ersten Bereich eine maximale Gesamtkraftänderungsamplitude aufweist;
- die Kraft-zu-Hub-Charakteristiken zumindest in dem ersten Bereich eine maximale individuelle Kraftänderungsamplitude aufweisen;
- die maximale Gesamtkraftänderungsamplitude kleiner ist als die maximale individuelle Kraftänderungsamplitude.

6. Stoßenergieabsorptionsvorrichtung nach Anspruch 4 oder 5, **dadurch gekennzeichnet, dass** der erste Bereich ein Bereich ist, in dem die Kraft-zu-Hub-Charakteristiken einen im Wesentlichen sinusförmigen Verlauf aufweisen, insbesondere einen Verlauf mit im Wesentlichen regelmäßigen Gipfeln und Tälern.

7. Stoßenergieabsorptionsvorrichtung nach einem der vorhergehenden Ansprüche, **dadurch gekennzeichnet, dass**

- ein erstes Energieabsorptionselement (202) die erste Kraft-zu-Hub-Charakteristik aufweist und ein zweites Energieabsorptionselement (203) die zweite Kraft-zu-Hub-Charakteristik aufweist;

- das erste Energieabsorptionselement (202) einen ersten Verformungswiderstand entlang seiner Längsachse (202.1) aufweist;
- das zweite Energieabsorptionselement (203) in einem ersten Abschnitt an seinem Kontaktende, einen zweiten Verformungswiderstand entlang seiner Längsachse (203.1) aufweist, und in einem zweiten Abschnitt, einen dritten Verformungswiderstand entlang seiner Längs Achse (203.1) aufweist; wobei
- der zweite Verformungswiderstand von dem ersten Verformungswiderstand verschieden ist.

8. Stoßenergieabsorptionsvorrichtung nach Anspruch 7, **dadurch gekennzeichnet, dass** die zweite Verformungswiderstand unterscheidet sich von dem dritten Verformungswiderstand.

9. Stoßenergieabsorptionsvorrichtung nach Anspruch 7 oder 8, **dadurch gekennzeichnet, dass** der zweite Verformungswiderstand geringer ist als zumindest einer des ersten Verformungswiderstands und des dritten Verformungswiderstands.

10. Stoßenergieabsorptionsvorrichtung nach einem der vorhergehenden Ansprüche, **dadurch gekennzeichnet, dass**

- ein erstes Energieabsorptionselement (202) die erste Kraft-zu-Hub-Charakteristik aufweist und ein zweites Energieabsorptionselement (203) die zweite Kraft-zu-Hub-Charakteristik aufweist; wobei
- ein erstes Energieabsorptionselementpaar (201.7) durch das erste Energieabsorptionselement (202) und das zweite Energieabsorptionselement (203) gebildet wird.

11. Stoßenergieabsorptionsvorrichtung nach Anspruch 10, **dadurch gekennzeichnet, dass** wenigstens eines von dem ersten Energieabsorptionselement (202) und dem zweiten Energieabsorptionselement (203) eine im wesentlichen rohrförmige Gestalt aufweist.

12. Stoßenergieabsorptionsvorrichtung nach Anspruch 11, **dadurch gekennzeichnet, dass**

- zumindest eines von dem ersten Energieabsorptionselement und dem zweiten Energieabsorptionselement in dem anderen von dem, ersten Energieabsorptionselement und dem zweiten Energieabsorptionselement angeordnet ist, wobei
- insbesondere das erste Energieabsorptionselement und das zweite Energieabsorptionselement konzentrisch angeordnet sind.

13. Stoßenergieabsorptionsvorrichtung nach Anspruch 12, **dadurch gekennzeichnet, dass**

- das erste Energieabsorptionselement und das zweite Energieabsorptionselement einen rechteckigen Querschnitt aufweisen und
- sich zwischen benachbarten Ecken des ersten Energieabsorptionselements und des zweiten Energieabsorptionselements und entlang der Längsachsen Abstandselemente erstrecken.

14. Stoßenergieabsorptionsvorrichtung nach einem der Ansprüche 11 bis 13, **dadurch gekennzeichnet, dass**

- eine Vielzahl von Versteifungselementen vorgesehen ist;
- die Versteifungselemente in einem Absorptionsvorrichtungsinnenraum angeordnet sind, der durch das äußere der Energieabsorptionselementen definiert ist; wobei
- die Versteifungselemente entlang der ersten Längsachse gegenseitig beabstandet sind und sich in einer Ebene quer zu der ersten Längsachse erstrecken.

15. Stoßenergieabsorptionsvorrichtung nach einem der Ansprüche 11 bis 14, **dadurch gekennzeichnet, dass** sich das innere der Energieabsorptionselemente in Richtung seines Kontaktendes verjüngt.

16. Stoßenergieabsorptionsvorrichtung nach Anspruch 10, **dadurch gekennzeichnet, dass** das erste Energieabsorptionselement (202) und das zweite Energieabsorptionselement (203) seitlich versetzt angeordnet sind.

17. Stoßenergieabsorptionsvorrichtung nach Anspruch 16, **dadurch gekennzeichnet, dass**

- ein zweites Energieabsorptionselementpaar (201.8) vorgesehen ist; wobei
- das zweite Energieabsorptionselementpaar (201.8) zu dem ersten Energieabsorptionselementpaar (201.7) seitlich versetzt angeordnet ist.

**18.** Stoßenergieabsorptionsvorrichtung nach einem der vorhergehenden Ansprüche, **dadurch gekennzeichnet, dass**

- mindestens eines der Energieabsorptionselemente (202, 203) vorverformte Bereiche an seinem Kontaktende (202.2, 203.2) aufweist;
- die vorverformten Bereiche dazu ausgebildet sind, eine anfängliche Kraftspitze der Kraft-zu-Hub-Charakteristik zu reduzieren (6, 7), wobei
- die vorgeformten Bereiche insbesondere durch Quervertiefungen (202.6, 203.6) des Energieabsorptionselements (202, 203) gebildet sind.

**19.** Stoßenergieabsorptionsvorrichtung nach einem der vorhergehenden Ansprüche, **dadurch gekennzeichnet, dass**

- an dem Kontaktende (202.2, 203.2) zumindest eines der Energieabsorptionselemente (202, 203) ein Kontaktelement (204) montiert ist, wobei
- das Kontaktelement (204) insbesondere eine Aufkletterschutzeinrichtung (204.1), insbesondere mindestens einen Aufkletterschutzrippe, aufweist.

**20.** Fahrzeug, insbesondere Schienenfahrzeug, mit einer Stoßenergieabsorptionsvorrichtung (201) nach einem der vorhergehenden Ansprüche.

## Revendications

**1.** Dispositif d'absorption d'énergie d'impact pour un véhicule, en particulier pour un véhicule ferroviaire, comprenant:

- une pluralité d'éléments allongés d'absorption d'énergie premiers (202, 203);
- chacun desdits éléments d'absorption d'énergie (202, 203) ayant un axe longitudinal (202.1; 203.1), une extrémité de contact (202.2; 203.2) faisant face à un partenaire d'impact et une extrémité de montage (202.3; 203.3) faisant face audit véhicule;
- chacun desdits éléments d'absorption (202, 203) étant adapté pour être déformé d'une manière définie le long de son axe longitudinal (202.1; 203.1) dans un procédé d'impact avec ledit partenaire d'impact;
- chacun desdits éléments d'absorption d'énergie (202, 203) ayant une caractéristique de force par course (6, 7), ladite caractéristique de force par course (6, 7) représentant le cours de la force de déformation le long de ladite axe longitudinal (202.1; 203.1) par rapport à la réduction de la longueur de l'un respectif desdits éléments d'absorption d'énergie (202, 203) pendant ledit procédé d'impact;
- chacun desdites caractéristiques de force par course comprenant une pluralité de pics de force adjacents;

**caractérisé en ce que**

- lesdits éléments d'absorption d'énergie (202, 203) sont connectés, au niveau de leurs extrémités de contact (202.2; 203.2), par un élément de contact (204) d'une manière qu'ils ont une mise en action simultanée de ladite force de déformation, et
- lesdits éléments d'absorption d'énergie (202, 203) sont disposés et/ou conçus d'une manière que lesdits pics de force adjacents d'au moins une première desdites caractéristiques de force par course sont décalés par rapport auxdits pics de force adjacents d'une deuxième desdites caractéristiques de force par course.

**2.** Dispositif d'absorption d'énergie d'impact selon la revendication 1, **caractérisé en ce que** lesdits pics de force adjacents desdites caractéristiques de force par course sont décalés de telle sorte que lesdits pics de force adjacents des autres desdites caractéristiques de force par course sont situés mutuellement décalés entre lesdits pics de force adjacents de ladite première caractéristique de force par course.

**3.** Dispositif d'absorption d'énergie d'impact selon la revendication 1 ou 2, **caractérisé en ce que** lesdits pics de force adjacents desdites caractéristiques de force par course sont décalés de telle sorte que lesdits pics de force adjacents des autres desdites caractéristiques de force par course sont distribués de manière uniforme entre lesdits pics de force adjacents de ladite première caractéristique de force par course.

**4.** Dispositif d'absorption d'énergie d'impact selon l'une quelconque des revendications précédentes, **caractérisé en**

ce que

- un nombre de N éléments d'absorption d'énergie (202, 203) est prévu;
- lesdits pics de force adjacents desdites caractéristiques de force par course, au moins dans une première zone, étant sensiblement régulièrement décalés par une première distance S;
- pics de force suivants de suivantes desdites caractéristiques de force par course, au moins dans ladite première zone, étant sensiblement régulièrement décalés par une seconde distance D étant calculée en tant que:

$$D = \frac{S}{N}.$$

5. Dispositif d'absorption d'énergie d'impact selon l'une quelconque des revendications précédentes, **caractérisé en ce que**

- lesdits éléments d'absorption d'énergie (202, 203) ont une caractéristique de force par course totale;
- ladite caractéristique de force par course totale résultant d'une superposition desdites caractéristiques de force par course;
- ladite caractéristique de force par course totale, au moins dans une première zone, ayant une amplitude de variation maximale de force totale;
- lesdites caractéristiques de force par course, au moins dans ladite première zone, ayant une amplitude de variation maximale de force individuelle;
- ladite amplitude de variation maximale de force totale étant plus petite que ladite amplitude de variation maximale de force individuelle.

6. Dispositif d'absorption d'énergie d'impact selon la revendication 4 ou 5, **caractérisé en ce que** ladite première zone est une zone dans laquelle lesdites caractéristiques de force par course présentent un cours sensiblement sinusoïdal, en particulier un cours avec des pics et des vallées sensiblement réguliers.

7. Dispositif d'absorption d'énergie d'impact selon l'une quelconque des revendications précédentes, **caractérisé en ce que**

- un premier élément d'absorption d'énergie (202) présente ladite première caractéristique de force par course et un deuxième élément d'absorption d'énergie (203) présente ladite seconde caractéristique de force par course;
- ledit premier élément d'absorption d'énergie (202) a une première résistance à la déformation le long de son axe longitudinal (202.1);
- ledit deuxième élément d'absorption d'énergie (203), dans une première section à son extrémité de contact, a une deuxième résistance à la déformation le long de son axe longitudinal (203.1) et, dans une deuxième section, présente une troisième résistance à la déformation le long de son axe longitudinal (203.1);
- ladite deuxième résistance à la déformation étant différente de ladite première résistance à la déformation.

8. Dispositif d'absorption d'énergie d'impact selon la revendication 7, **caractérisé en ce que** ladite deuxième résistance à la déformation est différente de ladite troisième résistance à la déformation.

9. Dispositif d'absorption d'énergie d'impact selon la revendication 7 ou 8, **caractérisé en ce que** ladite deuxième résistance à la déformation est inférieure à au moins une de ladite première résistance à la déformation et ladite troisième résistance à la déformation.

10. Dispositif d'absorption d'énergie d'impact selon l'une quelconque des revendications précédentes, **caractérisé en ce que**

- un premier élément d'absorption d'énergie (202) présente ladite première caractéristique de force par course et un deuxième élément d'absorption d'énergie (203) présente ladite seconde caractéristique de force par course;
- une paire d'éléments d'absorption d'énergie premier (201.7) étant formé par ledit premier élément d'absorption d'énergie (202) et ledit second élément d'absorption d'énergie (203).

**11.** Dispositif d'absorption d'énergie d'impact selon la revendication 11, **caractérisé en ce qu'**au moins l'un dudit premier élément d'absorption d'énergie (202) et dudit deuxième élément d'absorption d'énergie (203) a une forme sensiblement tubulaire.

**12.** Dispositif d'absorption d'énergie d'impact selon la revendication 11, **caractérisé en ce que**

- au moins l'un dudit premier élément d'absorption d'énergie et dudit deuxième élément d'absorption d'énergie est disposé à l'intérieur de l'autre dudit premier élément d'absorption d'énergie et dudit deuxième élément d'absorption d'énergie, dans lequel,
- en particulier, ledit premier élément d'absorption d'énergie et ledit second élément d'absorption d'énergie sont disposés concentriquement.

**13.** Dispositif d'absorption d'énergie d'impact selon la revendication 12, **caractérisé en ce que** -

- ledit premier élément d'absorption d'énergie et ledit deuxième élément d'absorption d'énergie ont une section transversale rectangulaire et
- des éléments d'écartement étendent entre des coins adjacents dudit premier élément d'absorption d'énergie et dudit deuxième élément d'absorption d'énergie et le long desdits axes longitudinaux.

**14.** Dispositif d'absorption d'énergie d'impact selon l'une quelconque des revendications 11 à 13, **caractérisé en ce que**

- une pluralité d'éléments de raidissement est prévue;
- lesdits éléments de raidissement étant situés dans un espace interne de dispositif d'absorption défini par l'un extérieur desdits éléments d'absorption d'énergie;
- lesdits éléments de raidissement étant mutuellement espacées le long dudit premier axe longitudinal et se prolongeant dans un plan transversal par rapport audit premier axe longitudinal.

**15.** Dispositif d'absorption d'énergie d'impact selon l'une quelconque des revendications 11 à 14, **caractérisé en ce que** l'intérieur desdits éléments d'absorption d'énergie se rétrécit en direction de son extrémité de contact.

**16.** Dispositif d'absorption d'énergie d'impact selon la revendication 10, **caractérisé en ce que** ledit premier élément d'absorption d'énergie (202) et ledit deuxième élément d'absorption d'énergie (203) sont disposés de manière latéralement décalé.

**17.** Dispositif d'absorption d'énergie d'impact selon la revendication 16, **caractérisé en ce que**

- une deuxième paire d'éléments d'absorption d'énergie (201.8) est prévue;
- ladite deuxième paire d'éléments d'absorption d'énergie (201.8) étant disposée dem manière latéralement décalée par rapport à ladite première paire d'éléments d'absorption d'énergie (201.7).

**18.** Dispositif d'absorption d'énergie d'impact selon l'une quelconque des revendications précédentes, **caractérisé en ce que**

- au moins l'un desdits d'éléments d'absorption d'énergie (202, 203) a des zones pré-déformées à son extrémité de contact (202.2, 203.2);
- lesdites zones pré-déformées étant adaptés pour réduire un pic de force initial de sa caractéristique de force par course ; dans laquelle
- en particulier, lesdites zones pré-déformées sont formés par des entailles transversales (202.6, 203.6) dudit élément d'absorption d'énergie (202, 203).

**19.** Dispositif d'absorption d'énergie d'impact selon l'une quelconque des revendications précédentes, **caractérisé en ce que**

- un élément de contact (204) est monté sur au moins un desdits éléments d'absorption d'énergie (202, 203) au niveau de ladite extrémité de contact (202.2, 203.2), dans lequel
- en particulier, ledit élément de contact (204) comprend des moyens anti-escalade (204.1), en particulier au moins une nervure anti-escalade.

20. Véhicule, en particulier véhicule ferroviaire, comprenant un dispositif d'absorption d'énergie d'impact (201) selon l'une quelconque des revendications précédentes.

Fig. 1

Fig. 2

Fig. 3

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 20117536 U1
- EP 0831005 A2

- DE 19814842 A1

**Non-patent literature cited in the description**

- Railway applications - Crashworthiness requirements for railway vehicle bodies, Section 7.2, European Committee for Standardization. *European Standard Draft prEN,* April 2005, vol. 15227